# EUROPEAN PATENT APPLICATION

(11) **EP 4 723 617 A1**
(43) Date of publication of application: **08.04.2026**
(21) Application number: 25161253.7
(22) Date of filing: 03.03.2025
(51) Int. Cl.: H04N 7/18, G06F 3/01, H04N 23/61, H04N 23/695

(54) **IMAGE CAPTURING DEVICE AND METHOD**

(30) Priority: 01.10.2024 TW 113137613
(71) Applicant: Magic Control Technology Corporation, New Taipei City 236658 (TW)
(72) Inventor: LIU, Pei-Chung, 235 New Taipei City (TW)
(74) Representative: TBK

(57) **Abstract**

An image capturing method comprising: obtaining a plurality of video images; analyzing whether there is a palm in the video images and identifying a palm gesture; when the palm gesture is a tracking gesture, entering a tracking identification mode, so as to use an interaction manner between a user and an object to determine that the object is a tracking object, and calculating relevant information of the tracking object; tracking the tracking object using a tracking operation, so as to generate a plurality of tracking images; and according to a first video display mode, using the tracking images and the video images to generate a plurality of live images.

## Description

### FIELD

The present invention relates to an image capturing device and method, in particular to an image capturing device and a method for tracking objects in a live stream.

### BACKGROUND

During live streaming, for example, in live streaming situations where live streamers selling merchandises or a lecturers give speeches, users themselves often need to control the image capturing device (e.g., camera) alone without any assistant to introduce products, give speeches, or perform other actions.

Specifically, when the user is introducing a product or requires students to focus on the key points at a specific location on the blackboard, the user needs to be able to quickly and accurately control the image capturing device so that the image capturing device performs the following operations: determining the location, size and other information of the object or area to be tracked according to the control of the user; continually tracking and quickly switching display image modes (for example, picture-in-picture mode, side-by-side mode, etc.) according to the control of the user; and ending the tracking mode and resuming normal live streaming mode according to the control of the user.

Therefore, there is a need for an image capturing device and method that can be used to track objects in a live stream without the assistance of the user.

### SUMMARY

In order to solve the abovementioned problems, the primary objective of the present invention is to provide an image capturing device for tracking objects in a live stream. The image capturing device comprises: an image capturing unit for acquiring a plurality of video images; an image processing unit for analyzing and processing the video images to generate a plurality of live images based on the video images; a connection port unit for connecting to an external device; and an output and input control unit for receiving the live images from the image processing unit and transmitting the live images to the external device through the connection port unit.

Preferably, the analysis and processing of the video images by the image processing unit include: analyzing whether there is a palm in the video images and identifying a palm gesture; when the palm gesture is a tracking gesture, entering a tracking identification mode, so as to use an interaction manner between a user and an object to determine that the object is a tracking object, and calculating relevant information of the tracking object; tracking the tracking object using a tracking operation, so as to generate a plurality of tracking images; and according to a first video display mode, using the tracking images and the video images to generate the live images.

Preferably, the image processing unit includes a video processor, a neural network processor, a memory, and a storage unit, the video processor and the neural network processor use programs stored in the storage unit to perform processing, and the memory is used to store the video images and the live images, the processing is based on the result of the artificial intelligence operations of the neural network processor, and the artificial intelligence operations include edge detection, image segmentation, vocal direction detection and feature extraction.

Preferably, the first video display mode includes picture-in-picture, side-by-side picture, picture cropping, picture overlapping, and picture zooming in and out, the first video display mode uses the tracking images and the video images to generate the live images based on the results of the artificial intelligence operations of the neural network processor, and the artificial intelligence operations in the first video display mode includes edge detection, image segmentation, vocal direction detection and feature extraction.

Preferably, the analysis and processing of the video images by the image processing unit further include: analyzing whether there is a palm in the video image and identifying whether the palm gesture is an end tracking gesture; when the palm gesture is the end tracking gesture, stopping the tracking of the tracking object; and according to a second video display mode, using the video images to generate the live images.

Preferably, the second video display mode includes picture-in-picture, side-by-side picture, picture cropping, picture overlapping, picture zoom-in and zoom-out, and original picture, the second video display mode uses the video images to generate the live images based on the results of the artificial intelligence operations of the neural network processor, and the artificial intelligence operations in the second video display mode include edge detection, image segmentation, vocal direction detection and feature extraction.

Preferably, the tracking gesture includes at least one of a first tracking gesture and a second tracking gesture, and the analysis and processing of the video images by the image processing unit further include: when the palm gesture is the first tracking gesture, entering a first tracking identification mode, using a first interaction manner between the user and the object, determining the object as the tracking object, and calculating relevant information of the tracking object; and/or when the palm gesture is the second tracking gesture, entering a second tracking identification mode, using a second interaction manner between the user and the object, determining the object as the tracking object, and calculating relevant information of the tracking object.

Preferably, the first tracking identification mode is used for objects that can be easily moved, and the second tracking identification mode is used for objects that cannot be easily moved or a tracking area.

Preferably, the first interaction manner is the user holding the tracking object and shaking the tracking object.

Preferably, when the user shakes the tracking object, a first frame of the video images is used as a reference image, and relevant information of the tracking object is calculated by using a (1+N)th frame as a comparison image.

Preferably, the second interaction manner is the user hand-tracing the position of the tracking area using a specific gesture.

Preferably, when a color of the tracking object in the tracking area is significantly different from a color of the surrounding environment, the tracking object is determined and the relevant information of the tracking object is calculated, and when there is no obvious color difference between the tracking object in the tracking area and the surrounding environment, the entire tracking area is used as the tracking object and the relevant information of the tracking object is calculated.

The present invention provides an image capturing method for tracking objects in a live stream, the image capturing method comprising: obtaining a plurality of video images; analyzing whether there is a palm in the video images and identifying a palm gesture; when the palm gesture is a tracking gesture, entering a tracking identification mode, so as to use an interaction manner between a user and an object to determine that the object is a tracking object, and calculating relevant information of the tracking object; tracking the tracking object using a tracking operation, so as to generate a plurality of tracking images; and according to a first video display mode, using the tracking images and the video images to generate a plurality of live images.

Preferably, the tracking gesture includes at least one of a first tracking gesture and a second tracking gesture, and the image capturing method further includes: when the palm gesture is the first tracking gesture, entering a first tracking identification mode, using a first interaction manner between the user and the object, determining the object as the tracking object, and calculating relevant information of the tracking object; and/or when the palm gesture is the second tracking gesture, entering a second tracking identification mode, using a second interaction manner between the user and the object, determining the object as the tracking object, and calculating relevant information of the tracking object.

### BRIEF DESCRIPTION OF DRAWINGS

FIG. 1 is a block diagram of an image capturing device according to an embodiment of the present invention;
FIG. 2 is a flow chart of an image capturing method according to an embodiment of the present invention; and
FIG. 3 is a flow chart of an image capture ending method according to an embodiment of the present invention.

### DETAILED DESCRIPTION

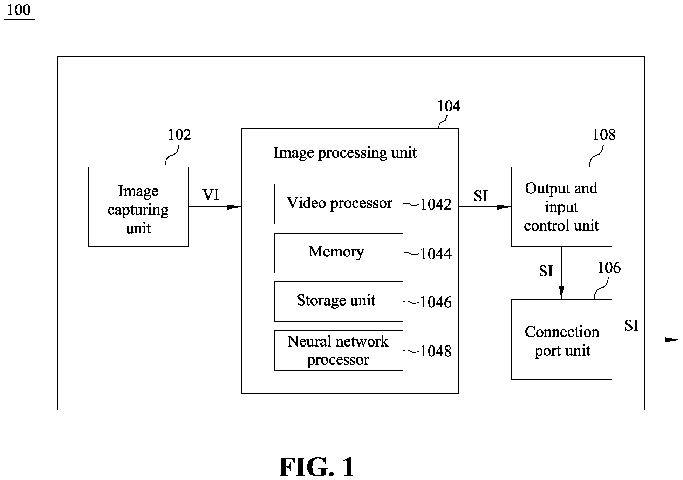

Please refer to FIG. 1, which is a block diagram of an image capturing device 100 according to an embodiment of the present invention. The image capturing device 100 includes: an image capturing unit 102 for obtaining video image VI; an image processing unit 104 for analyzing and processing the obtained video image VI to determine and start tracking based on the interaction between the user and the object, so as to generate live image SI; a connection port unit 106 for connecting to an external device (such as a computer, a host, etc.); and an output and input control unit 108 for receiving the live image SI from the image processing unit 104, and transmitting the live image SI to the external device through the connection port unit 106. Specifically, the image capturing device 100 is connected to the external device through the connection port unit 106, and the supported formats of the connection port unit 106 may be USB 2.0, USB 3.0, USB Type-C, multi-cable connection ports, or customized connection ports, and the connection port unit 106 is not limited to a wired connection, for example, the connection port unit 106 may be a wireless network connection or a Bluetooth connection, but is not limited thereto. In addition, the image capturing device 100 may include a video camera, a camera, a mobile phone, and other devices with image capturing functions and image processing functions.

Specifically, the image capturing unit 102 may include a lens, an image sensor, a module or integrated circuit capable of image capture such as HDMI to MIPI, DP to MIPI or HDMI to USB, etc. For example, the image capturing unit 102 can be implemented as a micro lens module of FOXLINK or an HDMI, DP, MIPI integrated circuit of Texas Instruments, etc. Specifically, the connection port unit 106 may include a wired USB connector or a wireless antenna. For example, the universal antenna of WNC. Specifically, the output and input control unit 108 may be an output and input controller in a system single chip, a wired USB controller or a wireless WIFI module. For example, the output and input control unit 108 can be implemented as a RK3588 chip of Rockchip Microelectronics or an SKW92A WIFI module of SKYLAB, or the like. However, the present invention is not limited to the above examples.

In an embodiment according to the present invention, the image processing unit 104 further includes: a video processor 1042, which may include a video processing engine (VPE) for performing image processing such as enlarging, reducing, cropping, encoding and decoding; a memory 1044; a storage unit 1046; and an neural network processor 1048 using an artificial intelligence engine to adaptively assist the image processing of the image processing unit 104 and is specially designed to accelerate artificial intelligence applications by using processors similar to the human nervous system, and can perform artificial intelligence operations such as character recognition. The video processor 1042 and the neural network processor 1048 use programs stored in the storage unit 1046 to perform functions such as video image analysis, gesture analysis, and object tracking. The memory 1044 is used to store video images and live streaming images. Specifically, the memory 1044 and the storage unit 1046 may include any form of memory, including but not limited to RAM. The components of the image processing unit 104 can be integrated into a system single chip. For example, the image processing unit 104 may be implemented as a RK3588 chip from Rockchip Microelectronics or an AMB82 chip from REALTEK. For example, the video processor 1042 may be implemented as a video decoder or GPU in the RK3588 chip from Rockchip Microelectronics. For example, the neural network processor 1048 may be implemented as a neural network processor in the RK3588 chip from Rockchip Microelectronics or the AMB82 chip from REALTEK. However, the present invention is not limited to the above examples.

According to the embodiment of the present invention, the processing of the image processing unit 104 includes processing the video image VI according to the selected video display mode. Video display modes include but are not limited to picture-in-picture (for example, the user is centered or the tracking object is centered), side-by-side (for example, the user and the tracking object are side by side), picture cropping (for example, only part of the user or the tracking object is retained), picture overlapping (for example, the picture of the user or the tracking object overlaps), picture zooming (for example, the user or the tracking object zooms in and out), the original picture, etc., and these video display modes can also be switched by default palm gesture controls. It can be understood that when the selected video display mode is the original picture, the image processing unit 104 may not process the video image VI and directly output the video image VI as the live image SI. In addition, the video display mode may also include processing the incoming video using computer vision algorithms through the neural network processor 1048, such as edge detection, image segmentation, vocal direction detection and feature extraction. In addition, a character detection algorithm is used to identify and locate the character in the video, such as the faces of the participants, human body shapes, or other objects of interest. In addition, a character detection algorithm is used to identify and locate the character in the picture or image. Also, once a character is identified, AI algorithms can use motion tracking technology to track the actions of the character over time. In addition, the image processing unit 104 can also process multiple video images in different video display modes. For example, the first video image is processed in the first video display mode, and the second video image is processed in the second video display mode. However, the present invention is not limited thereto. Wherein, the first video display mode may be a display mode when the tracking object is tracked, and the second video display mode may be a display mode when the tracking object is not tracked.

It can be understood that after determining the tracking object, the image processing unit 104 can process the video image VI and output one or multiple live images SI in different video display modes. It can be understood that in the present invention, the live video SI is not necessarily used for live streaming, but can also be stored in an external device or used in meetings, classes, and other situations.

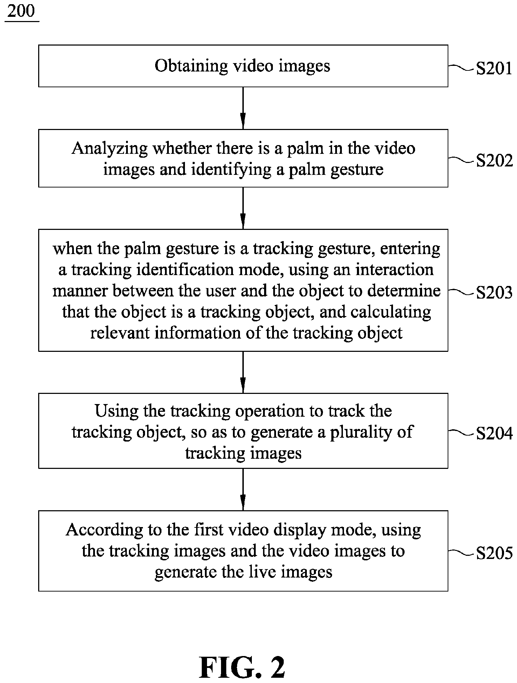

FIG. 2 is a flow chart of an image capturing method 200 according to an embodiment of the present invention. The image capturing method 200 is used to track objects in a live stream. The method includes the following steps.

Step S201: obtaining video images.

Step S202: analyzing whether there is a palm in the video images and identifying a palm gesture.

Step S203: when the palm gesture is a tracking gesture, entering a tracking identification mode, using an interaction manner between the user and the object to determine that the object is a tracking object, and calculating relevant information of the tracking object.

It should be understood that the image capture method 200 of the present invention is used to track objects in a live stream. Therefore, the image capture method 200 continuously analyzes palm gestures during a normal live stream.

It should be understood that, corresponding to different objects and situations, the tracking gesture of the image capturing method 200 of the present invention includes at least one of a first tracking gesture and a second tracking gesture. That is, in the present invention, the image capturing method 200 may use only one of the first tracking gesture or the second tracking gesture, or use the first tracking gesture and the second tracking gesture simultaneously.

Specifically, the tracking gestures are respectively a preset first tracking gesture and a preset second tracking gesture. The first tracking gesture and the second tracking gesture can be any gestures set according to the requirements of the user. That is, the user can preset any palm gesture in the image capturing method 200. Specifically, the user can preset the first tracking gesture to using fingers to perform a first action, and the user can preset the second tracking gesture to using fingers to perform a second action. It is understandable that according to the requirements of the user, multiple consecutive actions can also be used as tracking gestures. For example, the first tracking gesture is preset to using fingers to perform the first action and the second action consecutively. The first action and the second action can be set to the same or a different action. It is understandable that here, the first tracking gesture needs to be set to be different from the second tracking gesture.

In the present invention, the first tracking gesture and the second tracking gesture are used to allow the image capturing method 200 to enter different tracking identification modes. Specifically, when introducing objects in a live stream, the objects can be divided into objects that can be easily moved or objects that cannot be easily moved. For example, mobile phones or clothing are items that can be easily moved, while TVs or large toys are items that cannot be easily moved. For another example, when a teacher is giving a lecture, the auxiliary teaching aids in his hands are easily movable objects, and the writing on the blackboard is an immovable object or a specific area. Therefore, the first tracking gesture and the second tracking gesture are respectively used to allow the image capturing method 200 to enter the first tracking identification mode and the second tracking identification mode, respectively. Wherein, the first tracking identification mode is used for objects that can be easily moved, and the second tracking identification mode is used for heavy, immovable objects or a specific area.

Here, the first tracking identification mode is used for objects that can be easily moved. The first interaction manner is a default manner. For example, the first interaction manner is the user holding the object with his hand and shaking the object. Therefore, in the first tracking identification mode, when the user performs the first tracking gesture, the first tracking identification mode is entered, and then the user may pick up the object and shake the object, and the image capturing device determines that the shaking object is the tracking object. According to another embodiment of the present invention, the first interaction manner is the user holding the object (static, not shaking or moving), and the image capturing device determines the object held by the user as the tracking object. The first interaction manner can be defaulted as the user holding the object with the left hand, right hand, both hands, or either hand. In addition, similar to the first tracking gesture, the first interaction manner can also be preset to consist of a plurality of actions, such as holding the object with one hand and shaking it, and pointing the index finger of the other hand at the object. Another example is shaking the object first and then lightly throwing it. Or, for example, continually throwing and catching the object with both hands.

At this time, the position of the heel of the hand skeleton that picks up the object is detected and the detection tracking area is set based on this position, for example, a specific area extending outward based on this position. Next, when the user needs to shake the object in the first interaction manner, the first frame of the video image is used as the reference image, and the second frame or the (1+N)th frame of the video image is used as the comparison image to calculate the relevant information of the tracking object. It can be determined that the object is the tracking object, and the position, size and other information of the tracking object can be calculated.

Here, the second tracking identification mode is used for objects or tracking areas that cannot be easily moved. The second interaction manner is the user using a specific gesture to trace the position of the area by hand. Therefore, in the second tracking identification mode, after the user completes the second tracking gesture, the user can specify the tracking area by hand tracing the position of the tracking area using a specific gesture. Specifically, after performing a predetermined action (second tracking gesture), for example, bringing the thumb close to the index finger at a specific distance, for example, within one centimeter, the second tracking identification mode is entered, and then the hand or finger is used as a pen to follow the object to trace the tracking area (second interaction manner). At this time, when the color of the object in the tracking area is obviously different from the surrounding environment, it can be determined that the object is the tracking object, and the position, size and other information of the tracking object can be calculated. When there is no obvious difference between the color of the object in the tracking area and the surrounding environment, the entire area is regarded as the tracking object and the position, size and other information of the tracking object are calculated. Therefore, in this case, the "tracking object" in the second tracking identification mode can also be the "tracking area". In addition, similar to the first tracking gesture and the first interaction manner, the second tracking gesture and the second interaction manner can also be preset to consist of a plurality of actions. For example, after performing the second tracking gesture, it is determined that tracking is performed on an object or an area that cannot be easily moved, then the user touches the object or area with the hand (the first action of the second interaction manner), and then roughly draws the periphery of the object or tracking area with the hand or finger, or simply draw a rough circle to indicate the location of the tracking object or tracking area (the second action of the second interaction manner), and then the tracking object or tracking area and the position, edge, size and other information are determined through the results of artificial intelligence operations.

Step S204: using the tracking operation to track the tracking object, so as to generate a plurality of tracking images (including the user, single or multiple tracking objects).

At this point, the tracking object can be tracked using any known tracking operation. For another example, the artificial intelligence algorithm can use motion tracking technology to track the actions of the characters over time. The artificial intelligence algorithm can also perform angle adjustment calculations to facilitate the tracking of characters and objects.

Step S205: according to the first video display mode, using the tracking images and the video images to generate the live images.

Here, the first video display mode includes but is not limited to picture-in-picture, side-by-side picture, picture cropping, picture overlapping, picture zooming in and out, etc. The tracking images and the video images can be used to generate the live images based on the results of the artificial intelligence operations of the neural network processor in the image processing unit. The artificial intelligence operations include edge detection, image segmentation, vocal direction detection and feature extraction.

In addition, it can be understood that the above image capturing method 200 can also be implemented in a host in a program manner. For example, an image capturing device with only a shooting function is used to connect to a host, and the image capturing method 200 can be implemented by installing the image capturing method 200 in the host in the form of a program.

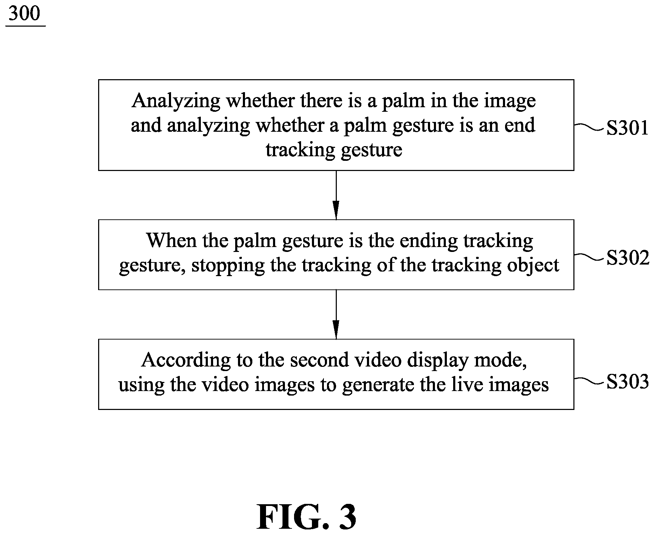

FIG. 3 is a flow chart of an image capture ending method 300 according to an embodiment of the present invention.

Step S301: analyzing whether there is a palm in the image and analyzing whether a palm gesture is an end tracking gesture.

Specifically, in the present invention, at least three different palm gestures need to be preset, which are the aforementioned first tracking gesture and second tracking gesture, and the end tracking gesture. The end tracking gesture can be any gesture set according to the requirements of the user. That is, the user can preset any palm gesture before performing the image capturing method 200.

Step S302: when the palm gesture is the ending tracking gesture, stopping the tracking of the tracking object.

Step S303: according to the second video display mode, using the video images to generate the live images.

Here, the second video display mode includes but is not limited to picture-in-picture, side-by-side picture, picture cropping, picture overlapping, picture zooming in and out, original picture, etc. The video images can be used to generate the live images based on the results of the artificial intelligence operations of the neural network processor in the image processing unit. The artificial intelligence operations include edge detection, image segmentation, vocal direction detection and feature extraction.

Accordingly, the image capturing device 100 of the present invention can be used to execute the image capturing methods 200 and 300, and the image capturing device 100 and the image capturing methods 200 and 300 of the present invention can be used without assistance from the user. When tracking an object in a live stream, the tracking object can be a movable object, a movable object, or a tracking area.

The present invention is not limited to the above-described embodiments, and it is obvious to those skilled in the art that various modifications and changes can be made to the present invention without departing from the spirit or scope of the invention.

Therefore, the present invention is intended to cover modifications and changes made to the present invention or falling within the scope of the claims and their equivalents.

## Claims

1. An image capturing device for tracking objects in a live stream, the image capturing device comprising:
an image capturing unit for acquiring a plurality of video images;
an image processing unit for analyzing and processing the video images to generate a plurality of live images based on the video images;
a connection port unit for connecting to an external device; and
an output and input control unit for receiving the live images from the image processing unit and transmitting the live images to the external device through the connection port unit,
wherein, the analysis and processing of the video images by the image processing unit include:
analyzing whether there is a palm in the video images and identifying a palm gesture;
when the palm gesture is a tracking gesture, entering a tracking identification mode, so as to use an interaction manner between a user and an object to determine that the object is a tracking object, and calculating relevant information of the tracking object;
tracking the tracking object using a tracking operation, so as to generate a plurality of tracking images; and
according to a first video display mode, using the tracking images and the video images to generate the live images.

2. The image capturing device of claim 1,
wherein, the image processing unit includes a video processor, a neural network processor, a memory, and a storage unit,
wherein, the video processor and the neural network processor use programs stored in the storage unit to perform processing, and the memory is used to store the video images and the live images,
wherein, the processing is based on the result of the artificial intelligence operations of the neural network processor, and
wherein, the artificial intelligence operations include edge detection, image segmentation, vocal direction detection and feature extraction.

3. The image capturing device of claim 2,
wherein, the first video display mode includes picture-in-picture, side-by-side picture, picture cropping, picture overlapping, and picture zooming in and out,
wherein, the first video display mode uses the tracking images and the video images to generate the live images based on the results of the artificial intelligence operations of the neural network processor, and
wherein, the artificial intelligence operations in the first video display mode includes edge detection, image segmentation, vocal direction detection and feature extraction.

4. The image capturing device of claim 2,
wherein, the analysis and processing of the video images by the image processing unit further include:
analyzing whether there is a palm in the video image and identifying whether the palm gesture is an end tracking gesture;
when the palm gesture is the end tracking gesture, stopping the tracking of the tracking object; and
according to a second video display mode, using the video images to generate the live images.

5. The image capturing device of claim 4,
wherein, the second video display mode includes picture-in-picture, side-by-side picture, picture cropping, picture overlapping, picture zoom-in and zoom-out, and original picture,
wherein, the second video display mode uses the video images to generate the live images based on the results of the artificial intelligence operations of the neural network processor, and
wherein, the artificial intelligence operations in the second video display mode include edge detection, image segmentation, vocal direction detection and feature extraction.

6. The image capturing device of claim 1,
wherein, the tracking gesture includes at least one of a first tracking gesture and a second tracking gesture, and
wherein, the analysis and processing of the video images by the image processing unit further include:
when the palm gesture is the first tracking gesture, entering a first tracking identification mode, using a first interaction manner between the user and the object, determining the object as the tracking object, and calculating relevant information of the tracking object; and/or
when the palm gesture is the second tracking gesture, entering a second tracking identification mode, using a second interaction manner between the user and the object, determining the object as the tracking object, and calculating relevant information of the tracking object.

7. The image capturing device of claim 6, wherein the first tracking identification mode is used for objects that can be easily moved, and the second tracking identification mode is used for objects that cannot be easily moved or a tracking area.

8. The image capturing device of claim 7, wherein the first interaction manner is the user holding the tracking object and shaking the tracking object.

9. The image capturing device of claim 8, wherein when the user shakes the tracking object, a first frame of the video images is used as a reference image, and relevant information of the tracking object is calculated by using a (1+N)th frame as a comparison image.

10. The image capturing device of claim 7, wherein the second interaction manner is the user hand-tracing the position of the tracking area using a specific gesture.

11. The image capturing device of claim 10, wherein when a color of the tracking object in the tracking area is significantly different from a color of the surrounding environment, the tracking object is determined and the relevant information of the tracking object is calculated, and when there is no obvious color difference between the tracking object in the tracking area and the surrounding environment, the entire tracking area is used as the tracking object and the relevant information of the tracking object is calculated.

12. An image capturing method for tracking objects in a live stream, the image capturing method comprising:
obtaining a plurality of video images;
analyzing whether there is a palm in the video images and identifying a palm gesture;
when the palm gesture is a tracking gesture, entering a tracking identification mode, so as to use an interaction manner between a user and an object to determine that the object is a tracking object, and calculating relevant information of the tracking object;
tracking the tracking object using a tracking operation, so as to generate a plurality of tracking images; and
according to a first video display mode, using the tracking images and the video images to generate a plurality of live images.

13. The image capturing method of claim 12,
wherein, the tracking gesture includes at least one of a first tracking gesture and a second tracking gesture, and
wherein, the image capturing method further comprises:
when the palm gesture is the first tracking gesture, entering a first tracking identification mode, using a first interaction manner between the user and the object, determining the object as the tracking object, and calculating relevant information of the tracking object; and/or
when the palm gesture is the second tracking gesture, entering a second tracking identification mode, using a second interaction manner between the user and the object, determining the object as the tracking object, and calculating relevant information of the tracking object.
